Europäisches Patentamt

European Patent Office

Office européen des brevets

(11) Publication number: **0 490 832 A2**

# EUROPEAN PATENT APPLICATION

(21) Application number: **91830531.9**

(51) Int. Cl.⁵: **B29C 71/04**

(22) Date of filing: **03.12.91**

(30) Priority: **07.12.90 IT 6798390**

(43) Date of publication of application:
**17.06.92 Bulletin 92/25**

(84) Designated Contracting States:
**AT BE CH DE DK ES FR GB GR IT LI LU NL SE**

(71) Applicant: **MONDO S.p.A.**
**Via Garibaldi 190**
**I-12060 Gallo d'Alba (Cuneo)(IT)**

(72) Inventor: **Stroppiana, Fernando**
**Via Alba/Narzole**
**I-12055 Diano d'Alba (Cuneo)(IT)**

(74) Representative: **Bosotti, Luciano et al**
**c/o Jacobacci-Casetta & Perani S.p.A. Via Alfieri, 17**
**I-10121 Torino(IT)**

(54) **A method and an installation for stabilising the appearance of coverings, particularly artificial floor-coverings and the like.**

(57) After its manufacture, the covering (P) is subjected to the action of lamps (6), preferably sodium lamps, which stabilise its appearance, particularly as regards its colour, to prevent it from changing as a result of subsequent exposure to sunlight. The preferred application is to linoleum flooring.

The present invention relates in general to coverings such as, for example, flooring made of synthetic and artificial materials.

It may be found, during the manufacture of such coverings, that the appearance of the finished product, particularly as regards its colour, tends to change after exposure to sunlight for a certain period of time.

For example, a yellowish marking may be produced during the manufacture of linoleum and this only disappears if the product is exposed to the sun for several hours.

This creates considerable problems since, when the package in which the manufactured product has been wrapped (usually in rolls) for dispatch to its final consignee has just been opened, the colour of the product is generally different from that which it will assume, as a result of exposure to daylight and/or artificial light, after it has been laid for several days.

This phenomenon is very marked if objects are left on a covering which has just been laid. If the objects are removed after several days, the difference between the colour of the exposed regions and that of the regions which were not exposed becomes apparent and this effect is unacceptable to the user.

This problem affects all coverings in general, both artificial and synthetic, and particularly rubber floorings vulcanised with sulphur.

In principle, the problem described above could be prevented by the exposure of the covering which has just been produced to ambient light for the time necessary to stabilise its appearance once and for all.

However, the time needed (typically of the order of several days) is wholly incompatible with the rates at which modern installations operate.

The object of the present invention is to provide means for stabilising the appearance of a covering material and preventing the problems described above within periods of time compatible with the normal industrial production of artificial or synthetic coverings.

According to the present invention, this problem is solved by a method having the characteristics recited specifically in the following claims.

A further subject of the present invention is an installation for carrying out the method.

Essentially, the present invention is based on the observation that, according to known principles currently used in lightfastness or colourfastness tests, the illumination of a substrate with artificial light can reproduce the effects of exposure to sunlight sufficiently quickly.

The Applicant has experimented with the use of artificial light sources normally used for lightfastness and colourfastness tests (arc or xenon lamps), however, and has found that they give results which are not wholly satisfactory for this application, the selection of, for instance, sodium lamps being greatly preferable.

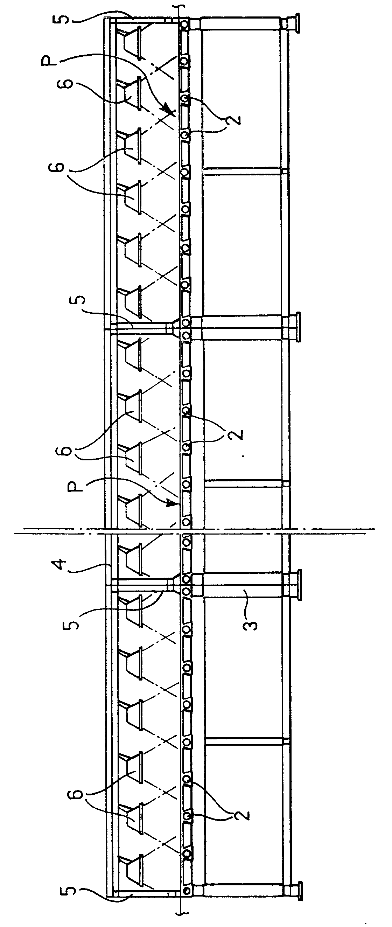

The invention will now be described, purely by way of non-limiting example, with reference to the appended drawing which is a schematic side elevation showing the structure of an installation operating according to the invention.

The installation in question, generally indicated 1, is constituted essentially by a tunnel of a certain length (for example 10-20 metres) through which one or more sheets of a laminar covering material P are intended to pass. More precisely, the material, for example, linoleum produced according to the method described in European patent application No. EP-A-0385053 , is discharged from a production line (not shown in the drawings) from the left-hand end of the drawing.

The sheet or sheets of the covering P - the installation 1 may in fact be of a width (2-3 metres) such as to enable four or more sheets to be treated simultaneously in parallel - advance on a horizontal conveyor with rollers 2 supported by a support framework 3 resting on the floor.

Above the conveying plane defined by the rollers 2 is a generally portal-like framework 4 with several support pillars 5. An array of equally-spaced lamps 6 (a linear array which can be multiplied by the number of sheets P - for example, four - advancing towards the installation) is mounted on the framework 4.

The length of the installation is selected according to the production rate (and hence the rate of advance) of the covering P so as to enable the covering P to be exposed to the light from the lamps 6 for a selectively predetermined period of time.

As a result of its exposure to artificial light, the appearance of the covering, particularly as regards its colour and the presence of any marks, tends to stabilise finally so that it does not subsequently undergo appreciable changes during its useful life.

In particular, it can be rolled up, stored before and after transfer to its place of installation and finally installed, without any appreciable changes in appearance. In particular, there is no danger that the covering will look different to the final user from the samples shown to him when it was ordered. Furthermore, its appearance will not change appreciably after it is laid and there will be no noticeable differences in appearance according to whether it is laid in the light or in the shade.

The selection of the characteristics of the lamps 6 and their positioning relative to the plane in which the covering P is conveyed was found to be a critical parameter for achieving completely satisfactory results.

In particular, the Applicant conducted comparative tests with the following light sources:
- mercury vapour lamps (380-730 nm),
- halogen lamps,
- xenon lamps (radiation spectrum 280-800 nm),
- ultraviolet lamps (radiation spectrum 320-390 nm - type A),
- ultraviolet lamps (radiation spectrum 275-375 nm - type B), and
- sodium lamps (280-800 nm).

All the lamps mentioned above were tested with different exposure times and mounted at different distances from the surface of the covering P. In this connection, it should also be noted that the latter parameter (the distance between the lamp and the covering) is in fact correlated to the surface area of the covering exposed to the radiation emitted by each lamp.

The results of the test can be summarised in the following terms.

## Mercury vapour lamps

Lamps of this type (HPL-N lamps produced by Philips, power 50-2000watts) were tested at 30 cm and 50 cm from a linoleum covering (produced according to the method of European patent application No.EP-A-0385053 ) which was advanced under the lamps at a speed of 50-150 cm/min.

At a distance of 30 cm, the radiation caused partial fusion and softening of the surface of the covering sufficient to change its appearance and cause further yellowing.

The same problems were also found at a distance of 50 cm with considerable yellowing.

## Halogen lamps

The aforementioned tests were repeated with HPI-T halogen lamps with powers of 250-2000 watts produced by Philips. Essentially the same problems were found as with the use of mercury vapour lamps.

## Xenon lamps

The same tests were again repeated using CSX 1000 W HSC-0F and CSX 900 W-OF lamps, also produced by Philips.

The problems seen in connection with mercury vapour and halogen lamps were not encountered. The results were effective at distances of both 30cm and 50 cm from the covering. As regards the removal of the yellowish marking on the starting product in particular, beneficial effects were noted after an exposure time of about 30 minutes and the marking was removed and the appearance of the covering completely stabilised after exposure for about 120 minutes.

It was found, however, that the necessary exposure period (120 minutes) was critical as regards the compactness of the installation. In particular, in order to ensure a time of 120 minutes for a covering produced at a rate of 36 metres/hour the installation had to be about 72 metres long, with the use of about 320 lamps.

## Ultraviolet lamps

No appreciable effect was found even if the exposure time was extended beyond 120 minutes. This applied both to the lamps indicated type A above and to those indicated type B, that is, operating in two different wavelength ranges.

## Sodium lamps

Various tests were carried out with the use, in particular, of SON and SON-T lamps produced by Philips.

In general, the radiation spectra of these lamps are substantially within the range of wavelengths from 280 to 800 nm and they are available with a wide range of illumination powers.

Tests were carried out with exposure distances (distances between the lamp and the covering P) of between 10 and 100 cm with particularly noticeable results in the range between 30 and 50 cm.

In general, it was found that the yellowish marking completely disappeared and the appearance of the covering P was consequently stabilised within an exposure time of 30 minutes which enabled the length of the tunnel 1 to be kept within reasonable limits, for example, of the order of 12 metres.

Whilst not wishing to be bound to any specific theory in this connection, the Applicant has reason to believe that the good results obtained with the xenon and sodium lamps are mainly attributable to the characteristics of the radiation spectra of these sources and, in particular, to the presence of radiation in the spectrum band from 280 to 800 nm. As stated, the use of sodium lamps was therefore found to be a preferred selection with an ideal combination of the wavelength of the radiation (or, more generally, the spectrum of the radiation) and the range of illumination powers obtainable.

Naturally, the principle of the invention remaining the same, the details of construction and forms of embodiment may be varied widely with respect to those described and illustrated, without thereby departing from the scope of the present invention.

## Claims

1. A method of stabilising the appearance of a covering material (P) whose appearance is susceptible to alteration as a result of exposure to light, characterised in that it comprises the step of subjecting the covering, after its manufacture, to radiation from artificial light sources (6) to produce a substantially stable change in its surface appearance so that its surface appearance is subsequently substantially unalterable as a result of further exposure to light.

2. A method according to Claim 1, characterised in that the radiation is produced by lamps (6) selected from the group consisting of xenon and sodium lamps.

3. A method according to Claim 1, characterised in that the radiation is generated by sodium lamps (6).

4. A method according to Claim 1, characterised in that the radiation is light radiation with a spectrum substantially between 280 and 800 nm.

5. A method according to any one of the preceding claims, characterised in that the covering (P) is exposed to the radiation from the artificial light sources for a period of less than 2 hours.

6. A method according to any one of the preceding claims, characterised in that the covering (P) is exposed to the radiation from the artificial light sources for a period of about 30 minutes.

7. An installation for carrying out the method according to any one of Claims 1 to 6, characterised in that it includes:
   - a tunnel structure (1 to 5) through which the covering is intended to pass along a predetermined path, and
   - an array of light sources (6) arranged along the path so as to illuminate the covering for a perdetermined period of time.

8. An installation according to Claim 7, characterised in that the lamps (6) are lamps selected from the group consisting of xenon and sodium lamps.

9. An installation according to Claim 7 , characterised in that the lamps (6) are sodium lamps.

10. An installation according to Claim 7, characterised in that the lamps (6) are lamps with radiation spectra substantially between 280 and 800 nm.

11. An installation according to any one of the preceding Claims 7 to 10, characterised in that it includes conveyor means (2) for advancing the covering (P) along the path.

12. An installation according to Claim 11, characterized in that the tunnel structure (4, 5) is of a given length selected according to the speed of advance of the conveyor means (2) so as to ensure that the covering (P) is exposed to the radiation for the predetermined period of time.

13. An installation according to Claim 12, characterised in that the predetermined period of time is less than 2 hours.

14. An installation according to Claim 13, characterised in that the predetermined period of time is about 30 minutes.